# EUROPEAN PATENT SPECIFICATION

(11) **EP 3 286 832 B1**
(45) Date of publication and mention of the grant of the patent: **13.11.2024**
(21) Application number: 16724971.3
(22) Date of filing: 15.04.2016
(51) Int. Cl.: H02S 20/00, H02S 30/20, F24S 25/70, F24S 25/10

(54) **FOLDABLE DEVICE CONTAINING SEVERAL SOLAR PANELS**
FALTBARE VORRICHTUNG MIT MEHREREN SONNENKOLLEKTOREN
DISPOSITIF REPLIABLE CONTENANT PLUSIEURS PANNEAUX SOLAIRES

(30) Priority: 21.04.2015 BE 201505262
(43) Date of publication of application: 28.02.2018
(73) Proprietor: OGD Tech S.A.S., 8399 Windhof (LU)
(72) Inventor: PRENGELS, Chris, 9070 Heusden (BE); REZNOR, Jessica Louise, 9070 Heusden (BE)
(74) Representative: Nicolle, Olivier
(86) International application number: PCT/IB2016/052148
(87) International publication number: WO 2016/170455

(56) References cited:
- WO-A1-2011/091151
- WO-A1-2011/091151
- WO-A1-2011/128463
- WO-A1-2011/128463
- WO-A1-2013/049610
- WO-A1-2013/049610
- WO-A1-2014/186345
- WO-A1-2014/186345
- WO-A2-2008/083219
- WO-A2-2013/061354
- WO-A2-2013/061354
- WO-A2-2014/036582
- WO-A2-2014/036582
- AT-A4- 509 886
- FR-A1- 2 988 505
- FR-A1- 2 988 505
- JP-A- H05 308 147
- JP-A- H05 308 147
- US-A1- 2003 127 125
- US-A1- 2010 206 354
- US-A1- 2013 186 450
- US-A1- 2014 125 134
- US-A1- 2014 125 134

## Description

The present invention concerns a device containing several solar panels.

Numerous devices with several solar panels are already known, such as solar panels mounted on the roofs of houses or devices in the shape of larger installations whereby a whole plant of solar panels is put up.

A major disadvantage of these devices is that mounting and connecting the different solar panels is not simple and requires good professional skills, as well as the appropriate installation material.

This disadvantage to some extent acts as a check on the spread of the use of solar energy in remote areas or in less developed countries where the means and knowledge for a proper installation often lack.

However, it is precisely in such regions and countries that the need for electrical energy is extremely high, whereas solar energy is abundantly available, so that generating electricity with solar panels could represent a relatively cheap and ecological solution there which is currently underused.

Another disadvantage of the known devices having several solar panels is that they are usually disposed as fixed and are not suitable for use in mobile installations.

A disadvantage of such known, fixed devices with several solar panels is that their installation usually requires some civil works.

Obtaining the rights to the grounds on which such known fixed devices with several solar panels are to be installed is also a major problem in many cases.

In some applications, however, an electrical power supply should only be temporarily installed in order to be re-used elsewhere afterwards, which is practically infeasible with the known devices having several solar panels.

For example, transmission towers or telephone exchanges are often temporarily put up at major events, for which power generators are often used for the time being.

Compared to the use of solar panels for electrically powering such installations, the use of power generators has a first disadvantage in that fuel is consumed, which is of course less interesting in terms of cost price and which is not good for the environment either.

Another disadvantage of the power generators is that they are usually very noisy machines.

Perhaps even more important is that power generators produce alternating current, while transmission towers and telephone exchanges are usually powered by direct current, just as many new types of consumers such as for example LED lights, so that in addition to the power generator also a rectifier will be required to convert the alternating current into direct current, which also represents a costly part of this solution.

Solar panels automatically deliver a DC voltage, which in principle makes the installation simpler and cheaper, since no additional conversion of the delivered energy is required.

By achieving a mobile form of a device with several solar panels, civil works can be avoided, no rights should be acquired on any lands and new ways of funding such a device can be found, such as leasing, where the financial means fall short for a classic form of financing.

In short, making a device with several solar panels fit for mobile use would offer many advantages, especially in areas with a lot of sunshine, but there is no good solution available at present, although two existing solutions are discussed here below.

AT509886A discloses a device comprising several solar panels that are hinge-mounted.

In AT 513875, a solar module is disclosed though, comprising a plurality of lamellar solar panels, which are mounted on a common axis so as to be able to pivot between a first position, in which they are positioned one on top of the other in a substantially coincident manner, and a second position, in which they are fanned out substantially adjacently, wherein, of every two adjacent solar panels, only the axis-side end section of the one solar panel has at least one guide and only the axis-side end section of the other solar panel has two stops which interact with the guide and are spaced from each other in the tangential direction, and wherein the solar panels are spaced from each other in the fanned out second position in their radially projecting sections that adjoin the aforementioned end sections.

US2003/127125 discloses a backup power supply apparatus including a light source absorbing device. The light source absorbing element is pivotally engaged with each other and is foldable for housing inside a casing to facilitate carrying outdoors for use. The light source absorbing element may be unfolded to absorb light source to generate electric power output required by a load.

Also, the present invention aims to provide a solution to one or several of the preceding and/or other disadvantages.

To this end, the present invention concerns a device containing several solar panels, whereby the solar panels are hinge-mounted to one another so as to form a composed solar panel in such a manner that the composed solar panel can be folded from a folded-out state into a folded state in which the solar panels are adjacent to one another and in that the composed solar panel can be unfolded from a folded state into an folded-out state in which the solar panels extend in a common plane, whereby the device is further provided with a frame which is hinge-mounted to the composed solar panel and which is formed of two frame portions which can be disassembled, in particular a first frame portion and a second frame portion, characterised in that the second frame portion is provided with adjusting means which connect the second frame portion concerned to the composed solar panel and whereby both frame portions contain a base extending in a plane and contain a number of standing ribs extending crosswise to the corresponding base, whereby in a disassembled condition of the frame, every frame portion forms a supporting structure for the solar panel, which can be unfolded into its folded-out state by unfolding the solar panels in relation to one another, and whereby the composed solar panel can be rotated as a whole in the folded-out state in relation to the first frame portion with which it is hinge-mounted so as to orient it in a horizontal position and/or in random oblique positions, whereby the frame, in an assembled condition, forms a beam-shaped cage around the folded, composed solar panel, whereby the base forms either the bottom surface or the upper surface respectively of the beam-shaped cage, at least when the frame is assembled into a cage.

A major advantage of such a device according to the invention is that it allows to fold a folded-out composed solar panel with relatively large dimensions into a package with relatively small dimensions, making the composed solar panel storable, easily transportable and thus fit for mobile use.

Another major advantage of such a device according to the invention is that the different solar panels of the composed solar panel may already be mutually electrically connected, such that the composed solar panel can be simply put in place by unfolding the different solar panels in relation to one another into the folded-out state, requiring no expert knowledge whatsoever of the user.

Another major advantage of a device according to the invention is that the device is provided with a frame formed of two frame portions which can be disassembled, namely a first frame portion and a second frame portion, whereby in a disassembled condition of the frame, every frame portion forms a supporting structure for the folded-out, composed solar panel and whereby the frame, in an assembled condition, forms a cage around the folded, composed solar panel.

Such a device according to the invention is very advantageous since the frame, in the folded condition of the composed solar panel, forms a protective cage around the solar panels, as a result of which the whole can be safely transported and several of such devices can be easily stacked onto one another.

By disassembling that same frame is moreover obtained a solid construction with which the folded-out, composed solar panel can be safely supported and maintained and with which its anchorage can be guaranteed, for example to absorb the forces exerted by the wind on the folded-out, composed solar panel.

Indeed, thanks to such an assembly the tilting point of the whole is shifted, and thus the resistance against tilting is increased by a factor of three.

Yet another advantage of such a device according to the invention is that the frame in an assembled condition forms a beam-shaped cage around the folded, composed solar panel, as a result of which several of such devices, with their frames in the assembled condition, can be easily stacked and transported.

In a preferred embodiment of a device according to the invention, the frame is hinge-mounted to the composed solar panel, whereby more specifically in the disassembled condition of the frame, the composed solar panel can be unfolded in its folded-out condition by unfolding the solar panels in relation to each other, and whereby the composed solar panel in the folded-out condition can be rotated as a whole in relation to the first frame portion with which it is hinge-mounted so as to orient it in a horizontal position and/or in random oblique positions.

It is clear that such an embodiment of a device according to the invention with a frame that is hinge-mounted to the composed solar panel forms a very convenient unit of elements that can be disassembled and that are connected to one another, whereby the composed solar panel can be stored in the frame on the one hand and can be easily folded out on the other hand and can be oriented in an oblique or horizontal position without much additional concern.

According to yet another preferred embodiment of a device according to the invention, the second frame portion is further provided with adjusting means which connect the second frame portion concerned to the composed solar panel and with which the distance between the folded-out, composed solar panel and the second frame portion concerned can be set so as to orient the folded-out, composed solar panel.

In such an embodiment of a device according to the invention, orienting the folded-out, composed solar panel with the adjusting means is very simple.

An appropriate choice of adjusting means will moreover result in a device in which the folded-out, composed solar panel can be automatically oriented in the right or most ideal position in relation to the sun and whereby this position may be for example also automatically adjusted as a function of the changing position of the sun during the day.

In yet another preferred embodiment of a device according to the invention, the device also comprises a container and the frame can be made to fit on the roof of said container, whereby in the assembled condition of the frame, a cage is formed on the roof of the container in which the folded composed solar panel is stored, whereby in the disassembled condition of the frame, the second frame portion is placed on the ground next to the container, while the first frame portion rests on the roof of the container and whereby the composed solar panel, in this condition of the frame, can be folded out thanks to the solar panels pivoting in relation to one another, and whereby the folded-out solar panel can be rotated in order to orient it between a horizontal position and/or a random oblique position.

This embodiment of a device according to the invention is adapted to a container, whereby for example devices such as communication means may be installed in the container so as to feed them with the electric energy coming from the composed solar panel.

Of course, also peripheral devices may be provided in the container, required to convert the solar energy into usable power such as for example an MPPT controller, batteries, an inverter and so on.

In order to better explain the characteristics of the invention, the following preferred embodiments of a device according to the invention are described hereafter as an example only without being limitative in any way, with reference to the accompanying figures, in which:
figure 1 is a view in perspective of an embodiment of a device according to the invention in a position in which the composed solar panel is folded and is stored in a frame;
figure 2 is a side view according to arrow F2 of the device from figure 1;
figure 3 is a top view according to arrow F3 of the device from figure 1;
figure 4 is a bottom plan view according to arrow F4 of the device from figure 1;
figure 5 is a front view according to arrow F5 of the device from figure 1;
figure 6 shows a view in perspective of another embodiment of a device according to the invention whereby a device as represented in figure 1 is partly mounted on the roof of a container, whereby the frame is disassembled, the composed solar panel is folded out and is placed in a horizontal position;
figure 7 shows a side view according to arrow F7 of the device from figure 6;
figures 8 and 9 represent the device according to the invention in a similar manner as in figures 6 and 7, whereby the composed, folded-out solar panel is this time placed in an inclined position of 15° in relation to the horizontal plane; and,
figures 10 and 11 again represent the device according to the invention in a manner similar to that of figures 6 and 7 or 8 and 9, whereby the composed, folded-out solar panel is placed in an inclined position of 30° in relation to the horizontal plane.

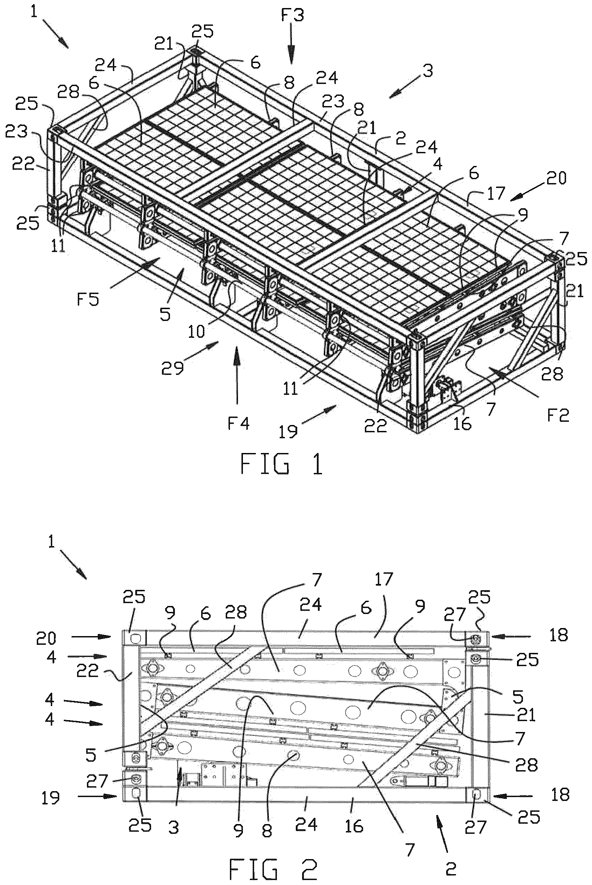

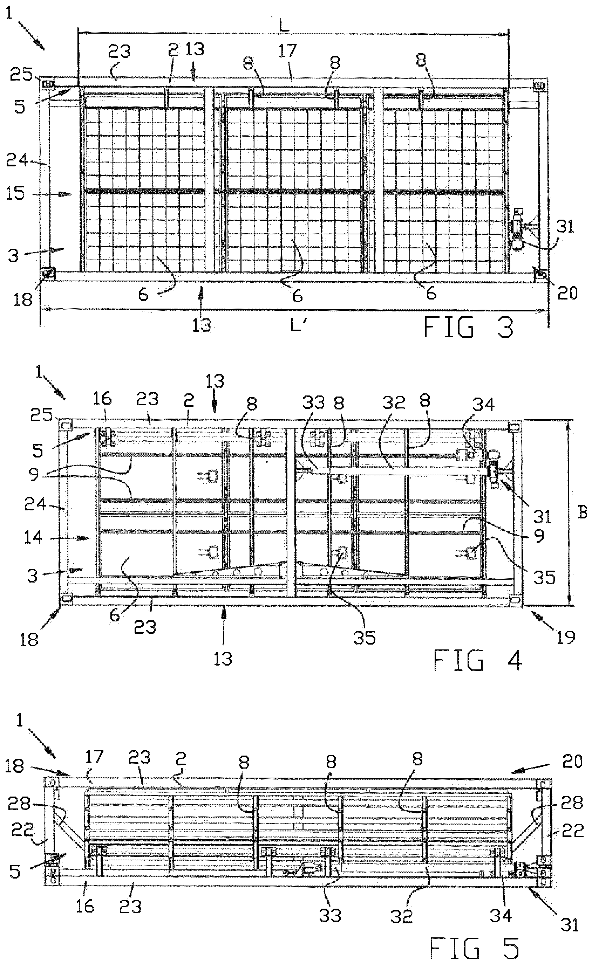

The device 1 according to the invention represented in figures 1 to 5 comprises a frame 2 in which is stored a composed solar panel 3 in a folded condition.

The frame 2 in this condition forms a beam-shaped cage 2 around the folded, composed solar panel 3.

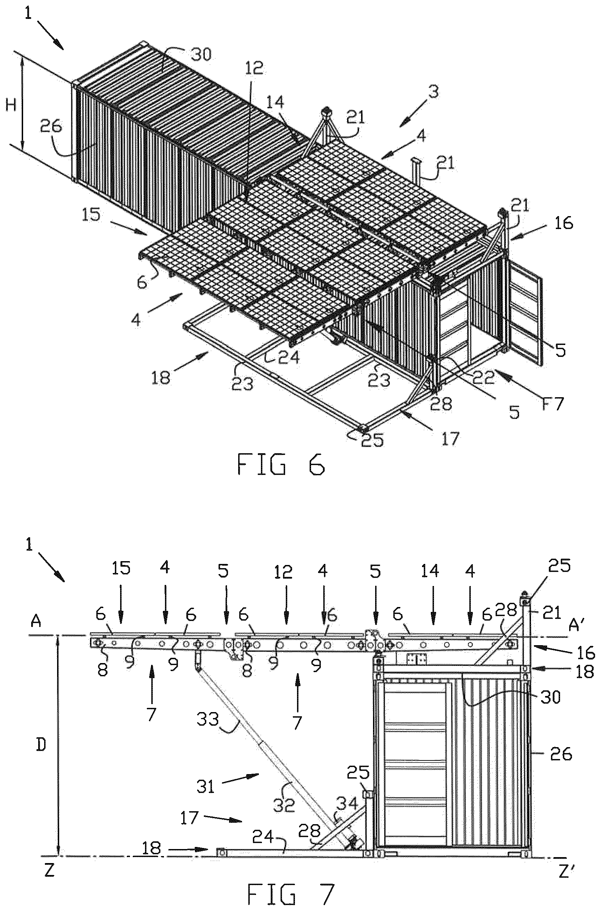

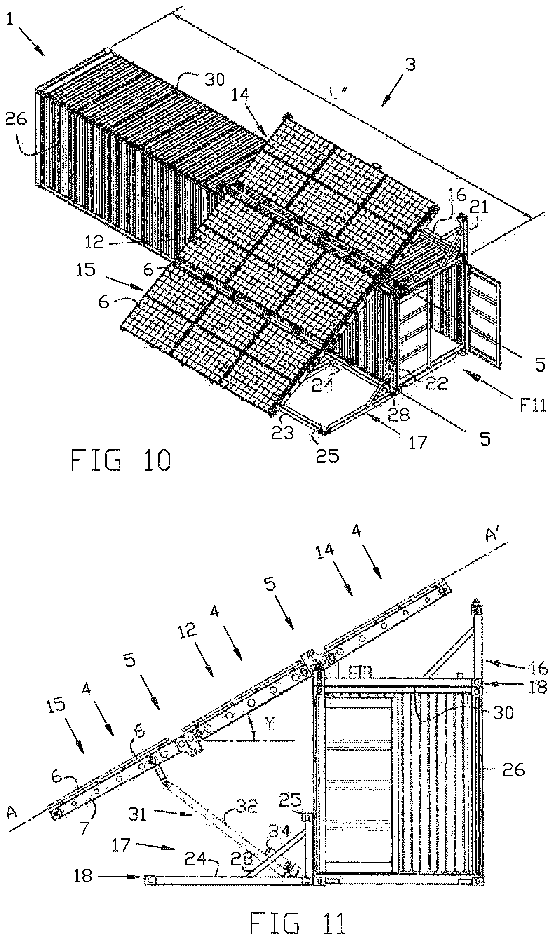

The solar panel 3 is composed of several solar panels 4 which are mutually hinge-mounted by means of hinged joints 5, in such a way that the composed solar panel 3 can be unfolded from the folded state, represented in figures 1 to 5, into a folded-out state, represented in figures 6 to 11, whereby in the folded-out state the solar panels 4 extend in a common plane AA' .

Vice versa, the composed solar panel 3 can be folded from the folded-out state, represented in figures 6 to 11, into the folded state which is represented in figures 1 to 5, by hinging the solar panels 4 in relation to one another by means of the hinged joints 5.

Every solar panel 4 of the composed solar panel 3 is in this case formed of several flat photovoltaic elements 6 provided on a flat support frame 7 made up of cross beams 8 and longitudinal slats 9.

These flat support frames 7 are mutually pivotally connected by means of the hinged joints 5.

In other embodiments, it is not excluded according to the invention to use for example photovoltaic elements 6 which are surrounded by a frame or the like or in which a frame is integrated and whereby the hinged joints 5 can be provided directly on said frame.

In the given example, every such hinged joint 5 has a common round hinge pin 10 extending parallel to the longitudinal slats 9.

At the location of each cross beam 8, such a hinged joint 5 is also provided with a pair of hinge leaves 11 coupled to one another by means of the hinge pin 10.

Every hinge leaf 11 of such a pair is connected to a cross beam 8 of one of the support frames 7 to be coupled by the hinged joint 5 concerned.

In the given example of figures 1 to 5, the device 1 is provided with three rectangular solar panels 3, but it is not excluded according to the invention to use more or less solar panels 3.

More specifically, an intermediate solar panel 12 is provided in this case which is hinge-mounted to an adjacent solar panel 14 or 15 on both longitudinal sides 13.

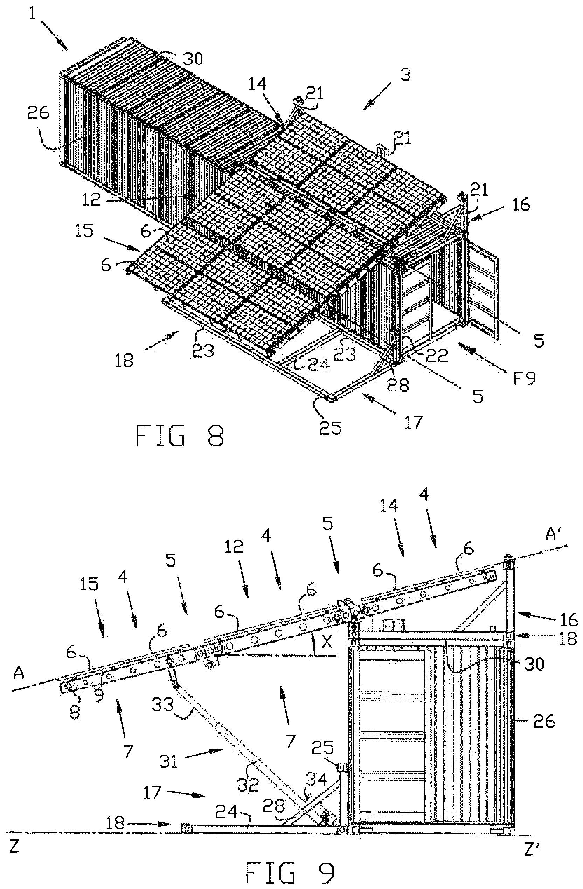

The adjacent solar panel 14 is hereinafter referred to as the top solar panel 14, because it is intended to be positioned, in an inclined position of the folded-out, composed solar panel 3, above the intermediate solar panel 12, as is represented for example in figures 8 to 11.

The adjacent solar panel 15 is hereinafter referred to as the bottom solar panel 15, as it is positioned under the intermediate solar panel 12 in the same inclined position of the folded-out, composed solar panel 3.

In the given example, the hinged joints 5 of the composed solar panel 3 are such that the intermediate solar panel 12 can rotate forward to the top solar panel 14, such that the photovoltaic elements 6 of the solar panels 12 and 14 concerned, in the folded state of the composed solar panel 3, are adjacent to one another.

Vice versa, the bottom solar panel 15 can rotate backwards to the intermediate solar panel 12, such that the support frames 7 of the solar panels 12 and 15 concerned, in the folded state of the composed solar panel 3, are adjacent to one another.

All that precedes is clearly illustrated for example in figure 2.

In this manner is obtained a compact whole when the composed solar panel 3 is put into its folded state, and the solar panel 3 can be stored securely and protected against damage to the photovoltaic elements 6.

However, other configurations are not excluded either according to the invention.

The frame 2 of the device 1 is composed of two frame portions 16 and 17 which can be disassembled, more specifically a first frame portion 16 and a second frame portion 17.

In a disassembled condition of the frame 2, each frame portion 16 and 17 forms a supporting structure for the folded-out, composed solar panel 3, as is represented in figures 6 to 11.

In a condition of the frame 2 wherein the frame portions 16 and 17 are assembled, it forms a cage 2 around the folded, composed solar panel 3, as is represented in figures 1 to 5.

In this case, the first frame portion 16 and the second frame portion 17 contain a base 18 extending in a plane, whereby this base 18 forms either the bottom surface 19 or the upper surface 20 respectively of the beam-shaped cage 2, at least when the frame 2 is assembled into a cage 2.

Further, each frame portion 16 and 17 contains a number of standing ribs, ribs 21 and 22 respectively, extending crosswise to the corresponding base 18.

The first frame portion 16 is provided with three such standing ribs 21, whereas the second frame portion 17 is provided with only two such standing ribs 22.

In general, standing ribs 21 or 22 can be provided forming a row of adjacent, standing ribs 21 and 22 between the bottom surface 19 and the upper surface 20 of the frame 2 in its assembled condition.

In another embodiment, a fixed panel may be provided in the plane of the standing ribs 21 and 22 in order to reduce the wind loads on the composed solar panel 3.

Naturally, also the number of standing ribs 21 and 22 may vary.

The base 18 in this case forms a rectangular frame 18 which is composed of longitudinal beams 23 and cross beams 24 which are connected in the corners to the corresponding standing rib 21 or 22 by means of corner pieces 25.

The corner pieces 25 are preferably of a type which is used as standard in a so-called ISO container 26 for transporting goods, an example of which is represented in figures 6 to 11.

In such a beam-shaped corner piece 25, according to specific ISO standards, holes 27 are provided in three mutually perpendicular planes which are used in the transport sector in order to be able to lift the containers 26 with so-called "twist locks" or in order to link several containers 26.

By applying the same kind of corner pieces 25 in a device 1 according to the invention, the frame 2 or the frame portions 16 and 17 can also be easily manipulated with the same hoist means as the standard ISO containers 26, or the device 1 can be easily linked to such a standard ISO container 26.

In support of the standing ribs 21 and 22 are provided slanting connection pieces 28 between the standing rib 21 or 22 concerned and the base 18.

The frame 2 is hinge-mounted to the composed solar panel 3, more specifically at the longitudinal side 13 of the intermediate solar panel 12 which is adjacent to the top solar panel 14.

The composed solar panel 3 is thereby hinge-mounted to the first frame portion 16 containing the bottom surface 19 of the beam-shaped cage 2, namely on the longitudinal side 29 of said bottom surface 19 opposite the pair of standing ribs 21 of the first frame portion 16 concerned.

In the disassembled condition of the frame 2, which is represented in figures 6 to 11, the composed solar panel 3 can be unfolded into its folded-out state by folding apart the solar panels 3 with respect to each other.

To this end, the length L of the composed solar panel 3 should of course be somewhat smaller than the length L' of the frame 2.

Further, the composed solar panel 3 can be rotated as a whole in its folded-out state, preferably gradually, with respect to the first frame portion 16, such that it can be oriented, for example in a horizontal position, as is represented in figures 6 and 7, or in an inclined position, as is represented in figures 8 to 11, in an oblique position at an angle X of 15° in relation to the horizontal plane ZZ' for figures 8 and 9, and in an inclined position at an angle Y of 30° in relation to the horizontal plane ZZ' respectively.

The frame portions 16 and 17 are designed to be gradually erected in support of the folded-out, composed solar panel 3, whereby each frame portion 16 and 17 is placed with its base 18 on a flat surface or on the surface of a supporting structure.

More specifically, in the given example, the first frame portion 16 is designed to support the composed solar panel 3 by putting it with its base 18 in a position at a certain height H above a flat surface 19 on which the other second frame portion 17 is placed with its base 18 in order to support the composed solar panel 3.

In the embodiments represented in figures 6 to 11, the supporting structure consists of a container 26, but in other cases also other supporting structures can be applied of course.

The frame 2 is hereby implemented with the right dimensions, such that it fits on the roof 30 of the container 26.

In this case, the frame 2 has a length L' equal to half the length L" of the container 26, such that two devices 1 can be lined up on the roof 30 of the container 26.

The frame 2 in this case has a width B which is equal to the width B of the container 26.

Putting up composed solar panels 3 may be simply done in practice by disassembling the frames 2 concerned and then turning the second frame portions 17 around, such that they can be put up on the ground with their base 18 next to the respective containers 26, which is illustrated by way of example in figures 6 to 11.

It is advantageous to place several containers 26 in the longitudinal direction over a distance L' corresponding to the length L' of the frame 2 in relation to each other.

In that case, a first frame portion 16 can be suspended with the composed solar panel 3 between a pair of containers 26 arranged in succession, more specifically by hanging this first frame portion 16 on either side to first frame portions 16 which are placed on the roof 30 of the successive containers 26 concerned.

The first frame portions 16 can hereby be connected to each other by making use of twist-locks provided in the corner pieces 25.

In a similar manner, the second frame portion 17 can be placed on the ground between the containers 26 and it can possibly be coupled to the adjacent frame portions 17.

Of course, other dimensions may be used, but it should be noted that it is generally advantageous to make the devices 1 such that they can be modularly built and combined to form a larger unit.

Another important and advantageous feature of the devices 1 represented in the figures consists in that the second frame portion 17 is provided with adjusting means 31 which connect the second frame portion 17 concerned to the composed solar panel 3 and with which the distance D between the folded-out, composed solar panel 3 and the second frame portion 17 concerned can be adjusted in order to orient the folded-out, composed solar panel 3.

In the given embodiment, these adjusting means 31 comprise a cylinder 32 and an electric spindle 33, as well as an electric control 34, with which the above-mentioned distance D can be set between the second frame portion 17 and the folded-out, composed solar panel 3.

The control 34 may for example also comprise detection means with which it is possible to detect in what direction the incident light has the most intensity, such that based on these measurements the folded-out, composed solar panel 3 can be automatically put in a position crosswise to this direction with the largest light intensity by setting the distance D correctly.

The composed solar panel 3 may for example also be automatically put in the horizontal position by the control 34 in case of too high wind speeds or snowfall, for example.

This can obviously be done by using the well-known control technology methods.

The adjusting means 31 and control 34 may also have other shapes.

The adjusting means 31 can also be stored in the frame 2 in the condition wherein it forms a cage 2 for the folded, composed solar panel 3.

The photovoltaic elements 6 and solar panels 4 are pre-wired and pre-connected to one another by the appropriate connecting means 35, such that the composed solar panel 3 can be put into operation as an electrical power supply by simply arranging the frame portions 16 and 17 correctly, folding out the composed solar panel 3 and putting it in the right position in relation to the sun.

It is clear that the aims of the invention have been achieved, namely obtaining a simple system for erecting several solar panels 4 which can be used in a mobile manner by people who should not have any particular knowhow to that end.

The invention is by no means restricted to the embodiments of a device 1 according to the invention described by way of example and illustrated in the figures; on the contrary, such a device 1 can be made in many different ways while still remaining within the scope of the invention.

## Claims

1. Device (1) comprising several solar panels (4) which solar panels (4) are mutually hinge-mounted so as to form a composed solar panel (3) in such a way that the composed solar panel (3) can be folded from a folded-out state into a folded state in which the solar panels (4) are adjacent to one another and in that the composed solar panel (3) can be unfolded from a folded state into a folded-out state in which the solar panels (4) extend in a common plane (AA'), whereby the device (1) is further provided with a frame (2) which is hinge-mounted to the composed solar panel (3) and which is formed of two frame portions (16,17) which can be disassembled, more specifically a first frame portion (16) and a second frame portion (17), **characterised in that** the second frame portion (17) is provided with adjusting means (31) which connect the second frame portion (17) concerned to the composed solar panel (3) and whereby both frame portions (16,17) contain a base (18) extending in a plane and contain a number of standing ribs (21) and (22) respectively, extending crosswise to the corresponding base (18), whereby in a disassembled condition of the frame (2), each frame portion (16,17) forms a supporting structure for the solar panel (3), which can be unfolded into its folded-out state by unfolding the solar panels (4) in relation to one another, and whereby the composed solar panel (3) can be rotated as a whole in the folded-out state in relation to the first frame portion (16) with which it is hinge-mounted so as to orient it in a horizontal position and/or in random oblique positions, whereby the frame (2), in an assembled condition, forms a beam-shaped cage (2) around the folded, composed solar panel (3), whereby the base (18) forms either the bottom surface (19) or the upper surface (20) respectively of the beam-shaped cage (2), at least when the frame (2) is assembled into a cage (2).

2. Device (1) according to claim 1, **characterised in that** the solar panels (4) are formed of one or several flat photovoltaic elements (6) provided on a flat support frame (7) and whereby these flat support frames (7) are mutually hinge-mounted.

3. Device (1) according to claim 1 or 2, **characterised in that** the device (1) is provided with three rectangular solar panels (4), more specifically an intermediate solar panel (12) which is hinge-mounted on both longitudinal sides (13) to an adjacent solar panel (14,15), more specifically to a top solar panel (14) on the one hand and to a bottom solar panel (15) on the other hand, designed to be positioned, in an oblique position of the folded-out, composed solar panel (3), above and under the intermediate solar panel (12) respectively.

4. Device (1) according to claim 3, **characterised in that** the intermediate solar panel (12) can be rotated forward to the top solar panel (14), such that the photovoltaic elements (6) of the solar panels (14) concerned are adjacent to one another in the folded state of the composed solar panel (3), and whereby the bottom solar panel (15) can be rotated backward to the intermediate solar panel (12), such that the support frames (7) of the solar panels (4) concerned are adjacent to one another in the folded state of the composed solar panel (3).

5. Device (1) according to claim 3 or 4, **characterised in that** the composed solar panel (3) is hinge-mounted to the frame (2) on the longitudinal side (13) of the intermediate solar panel (12) which is adjacent to the top solar panel (14).

6. Device (1) according to one or several of the preceding claims, **characterised in that** in the disassembled condition of the frame (2), the composed solar panel (3) can be unfolded into its folded-out state by unfolding the solar panels (4) in relation to one another, and whereby the composed solar panel (3) can be rotated as a whole in the folded-out state in relation to the first frame portion (16) with which it is hinge-mounted so as to orient it in a horizontal position and/or in random oblique positions.

7. Device (1) according to one or several of the preceding claims, **characterised in that** the first frame portion (16) and the second frame portion (17) contain a base (18) extending in a plane, whereby this base (18) forms either the bottom surface (19) or the upper surface (20) of the beam-shaped cage (2) respectively, and whereby the frame portions (16,17) further comprise a number of standing ribs (21,22) extending crosswise to the corresponding base (18), and whereby the standing ribs (21,22) form a row of adjacent, standing ribs (21,22) between the upper surface (20) and the bottom surface (19) of the frame (2) in the assembled condition.

8. Device (1) according to one or several of the preceding claims, **characterised in that** the frame portions (16,17) are designed to be gradually erected in support of the folded-out, composed solar panel (3), whereby each frame portion (16,17) is placed with its base (18) on a flat surface or a plane of a supporting structure.

9. Device (1) according to claims 6 and 8, **characterised in that** the composed solar panel (3) is hinge-mounted to the first frame portion (16) containing the bottom surface (19) of the beam-shaped cage (2), namely on the longitudinal side (29) of this bottom surface (19) opposite the standing ribs (21) of the first frame portion (16) concerned, whereby this first frame portion (16) is designed to support the composed solar panel (3) by placing it with its base (18) in a position situated at a certain height (H) above a flat surface on which the other second frame portion (17) is placed with its base so as to support the composed solar panel (3) .

10. Device according to one or several of the preceding claims, **characterised in that** the with the adjusting means (31), the distance (D) between the folded-out, composed solar panel (3) and the second frame portion (17) concerned can be adjusted so as to be able to orient the folded-out, composed solar panel (3).

11. Device (1) according to claim 10, **characterised in that** the adjusting means (31) comprise a cylinder (32) and a spindle (33), as well as a control (34) thereof, with which the above-mentioned distance (D) can be set between the second frame portion (17) and the folded-out, composed solar panel (3) and whereby the adjusting means (31) can also be stored in the frame (2) in the condition wherein it forms a cage (2) for the folded, composed solar panel (3).

12. Device (1) according to one or several of claims 8 to 11, **characterised in that** it comprises a container (26) and **in that** the frame (2) fits on the roof (30) of the container (26), whereby in the assembled condition of the frame (2) a cage is formed on the roof (30) of the container (26) in which the folded composed solar panel (3) is stored, whereby in the disassembled condition of the frame (2), the second frame portion (17) is placed on the ground next to the container (26), whereas the first frame portion (16) rests on the roof (30) of the container (26) and whereby the composed solar panel (3) in this condition of the frame (2) can be folded-out by hinging the solar panels (4) in relation to one another and whereby the folded-out, composed solar panel (3) can be rotated so as to orient it between a horizontal position and/or a random oblique position.

## Patentansprüche

1. Vorrichtung (1), umfassend mehrere Solarmodule (4), wobei die Solarmodule (4) mit Scharnieren aneinander montiert sind, so dass sie derart ein zusammengesetztes Solarmodul (3) bilden, dass das zusammengesetzte Solarmodul (3) von einem ausgeklappten Zustand in einen zusammengeklappten Zustand, in dem die Solarmodule (4) aneinander angrenzen, geklappt werden kann, und dass das zusammengesetzte Solarmodul (3) von einem zusammengeklappten Zustand in einen ausgeklappten Zustand aufgeklappt werden kann, in dem sich die Solarmodule (4) in einer gemeinsamen Ebene (AA') erstrecken, wobei die Vorrichtung (1) ferner mit einem Rahmen (2) versehen ist, der mit einem Scharnier an dem zusammengesetzten Solarmodul (3) montiert und aus zwei Rahmenabschnitten (16, 17) gebildet ist, die auseinandergebaut werden können, insbesondere einem ersten Rahmenabschnitt (16) und einem zweiten Rahmenabschnitt (17), **dadurch gekennzeichnet, dass** der zweite Rahmenabschnitt (17) mit Einstellmitteln (31) versehen ist, die den zweiten betreffenden Rahmenabschnitt (17) mit dem zusammengesetzten Solarmodul (3) verbinden, und wobei beide Rahmenabschnitte (16, 17) eine Basis (18) enthalten, die sich in einer Ebene erstreckt und eine Anzahl von stehenden Rippen (21) bzw. (22) enthält, die sich quer zur entsprechenden Basis (18) erstrecken, wobei in einem auseinandergebauten Zustand des Rahmens (2) jeder Rahmenabschnitt (16, 17) eine Trägerstruktur für das Solarmodul (3) bildet, die in ihren ausgeklappten Zustand aufgeklappt werden kann, indem die Solarmodule (4) zueinander aufgeklappt werden, und wobei das zusammengesetzte Solarmodul (3) als Ganzes in dem ausgeklappten Zustand in Bezug auf den ersten Rahmenabschnitt (16), an dem es mit einem Scharnier montiert ist, gedreht werden kann, um es in einer horizontalen Position und/oder in beliebigen schrägen Positionen auszurichten, wobei der Rahmen (2) in einem zusammengebauten Zustand einen balkenförmigen Käfig (2) um das zusammengeklappte, zusammengesetzte Solarmodul (3) bildet, wobei die Basis (18) jeweils entweder die untere Oberfläche (19) oder die obere Oberfläche (20) des balkenförmigen Käfigs (2) zumindest dann bildet, wenn der Rahmen (2) zu einem Käfig (2) zusammengebaut ist.

2. Vorrichtung (1) nach Anspruch 1, **dadurch gekennzeichnet, dass** die Solarmodule (4) aus einem oder mehreren flachen Photovoltaikelementen (6) gebildet sind, die auf einem flachen Trägerrahmen (7) vorgesehen sind, und wobei diese flachen Trägerrahmen (7) durch ein Scharnier aneinander montiert sind.

3. Vorrichtung (1) nach Anspruch 1 oder 2, **dadurch gekennzeichnet, dass** die Vorrichtung (1) mit drei rechteckigen Solarmodulen (4), insbesondere einem Zwischensolarmodul (12), versehen ist, das an beiden Längsseiten (13) mit einem Scharnier an einem angrenzenden Solarmodul (14, 15), insbesondere an einem oberen Solarmodul (14) einerseits und an einem unteren Solarmodul (15) andererseits montiert ist, die dazu gestaltet sind, in einer schrägen Position des ausgeklappten, zusammengesetzten Solarmoduls (3) über bzw. unter dem Zwischensolarmodul (12) positioniert zu werden.

4. Vorrichtung (1) nach Anspruch 3, **dadurch gekennzeichnet, dass** das Zwischensolarmodul (12) vorwärts zum oberen Solarmodul (14) hin gedreht werden kann, so dass die Photovoltaikelemente (6) der betreffenden Solarmodule (14) im zusammengeklappten Zustand des zusammengesetzten Solarmoduls (3) aneinander angrenzen, und wobei das untere Solarmodul (15) rückwärts zum Zwischensolarmodul (12) hin gedreht werden kann, so dass die Trägerrahmen (7) der betreffenden Solarmodule (4) im zusammengeklappten Zustand des zusammengesetzten Solarmoduls (3) aneinander angrenzen.

5. Vorrichtung (1) nach Anspruch 3 oder 4, **dadurch gekennzeichnet, dass** das zusammengesetzte Solarmodul (3) mit einem Scharnier auf der Längsseite (13) des Zwischensolarmoduls (12), das an das obere Solarmodul (14) angrenzt, an dem Rahmen (2) montiert ist.

6. Vorrichtung (1) nach einem oder mehreren der vorhergehenden Ansprüche, **dadurch gekennzeichnet, dass** im auseinandergebauten Zustand des Rahmens (2) das zusammengesetzte Solarmodul (3) in seinen ausgeklappten Zustand aufgeklappt werden kann, indem die Solarmodule (4) in Bezug zueinander aufgeklappt werden, und wobei das zusammengesetzte Solarmodul (3) als Ganzes im ausgeklappten Zustand in Bezug auf den ersten Rahmenabschnitt (16), an dem es mit einem Scharnier montiert ist, gedreht werden kann, um es in einer horizontalen Position und/oder in beliebigen schrägen Positionen auszurichten.

7. Vorrichtung (1) nach einem oder mehreren der vorhergehenden Ansprüche, **dadurch gekennzeichnet, dass** der erste Rahmenabschnitt (16) und der zweite Rahmenabschnitt (17) eine Basis (18) enthalten, die sich in einer Ebene erstreckt, wobei diese Basis (18) jeweils entweder die untere Oberfläche (19) oder die obere Oberfläche (20) des balkenförmigen Käfigs (2) bildet, und wobei die Rahmenabschnitte (16, 17) ferner eine Anzahl von stehenden Rippen (21, 22) umfassen, die sich quer zur entsprechenden Basis (18) erstrecken, und wobei die stehenden Rippen (21, 22) im zusammengebauten Zustand eine Reihe von angrenzenden, stehenden Rippen (21, 22) zwischen der oberen Oberfläche (20) und der unteren Oberfläche (19) des Rahmens (2) bilden.

8. Vorrichtung (1) nach einem oder mehreren der vorhergehenden Ansprüche, **dadurch gekennzeichnet, dass** die Rahmenabschnitte (16, 17) dafür gestaltet sind, als Träger des ausgeklappten, zusammengesetzten Solarmoduls (3) allmählich aufgerichtet zu werden, wobei jeder Rahmenabschnitt (16, 17) mit seiner Basis (18) auf einer flachen Oberfläche oder einer Ebene einer Trägerstruktur platziert wird.

9. Vorrichtung (1) nach den Ansprüchen 6 und 8, **dadurch gekennzeichnet, dass** das zusammengesetzte Solarmodul (3) mit einem Scharnier an dem ersten Rahmenabschnitt (16) montiert ist, der die untere Oberfläche (19) des balkenförmigen Käfigs (2) enthält, nämlich auf der Längsseite (29) dieser unteren Oberfläche (19) gegenüber den stehenden Rippen (21) des ersten betreffenden Rahmenabschnitts (16), wobei dieser erste Rahmenabschnitt (16) dafür gestaltet ist, das zusammengesetzte Solarmodul (3) zu tragen, indem es mit seiner Basis (18) in einer Position platziert wird, die sich in einer bestimmten Höhe (H) über einer flachen Oberfläche befindet, auf der der andere, zweite Rahmenabschnitt (17) mit seiner Basis platziert ist, um das zusammengesetzte Solarmodul (3) zu tragen.

10. Vorrichtung nach einem oder mehreren der vorhergehenden Ansprüche, **dadurch gekennzeichnet, dass** mit den Einstellmitteln (31) der Abstand (D) zwischen dem ausgeklappten, zusammengesetzten Solarmodul (3) und dem zweiten betreffenden Rahmenabschnitt (17) so eingestellt werden kann, dass es möglich ist, das ausgeklappte zusammengesetzte Solarmodul (3) auszurichten.

11. Vorrichtung (1) nach Anspruch 10, **dadurch gekennzeichnet, dass** die Einstellmittel (31) einen Zylinder (32) und eine Spindel (33) sowie eine Steuerung (34) von diesen umfassen, mit der der vorstehend erwähnte Abstand (D) zwischen dem zweiten Rahmenabschnitt (17) und dem ausgeklappten, zusammengesetzten Solarmodul (3) eingestellt werden kann, und wobei die Einstellmittel (31) auch in dem Zustand in dem Rahmen (2) gelagert werden können, in dem er einen Käfig (2) für das zusammengeklappte, zusammengesetzte Solarmodul (3) bildet.

12. Vorrichtung (1) nach einem oder mehreren der Ansprüche 8 bis 11, **dadurch gekennzeichnet, dass** sie einen Container (26) umfasst und dass der Rahmen (2) auf das Dach (30) des Containers (26) passt, wobei im zusammengebauten Zustand des Rahmens (2) ein Käfig auf dem Dach (30) des Containers (26) gebildet ist, in dem das zusammengeklappte zusammengesetzte Solarmodul (3) gelagert ist, wobei im auseinandergebauten Zustand des Rahmens (2) der zweite Rahmenabschnitt (17) auf dem Boden neben dem Container (26) platziert ist, während der erste Rahmenabschnitt (16) auf dem Dach (30) des Containers (26) ruht, und wobei das zusammengesetzte Solarmodul (3) in diesem Zustand des Rahmens (2) durch gelenkiges Lagern der Solarmodule (4) in Bezug zueinander ausgeklappt werden kann, und wobei das ausgeklappte, zusammengesetzte Solarmodul (3) gedreht werden kann, um es zwischen einer horizontalen Position und/oder einer beliebigen schrägen Position auszurichten.

## Revendications

1. Dispositif (1) comprenant plusieurs panneaux solaires (4), lesquels panneaux solaires (4) sont mutuellement articulés de manière à former un panneau solaire composé (3) de telle sorte que le panneau solaire composé (3) peut être plié, au départ d'un état déplié, en un état plié dans lequel les panneaux solaires (4) sont adjacents l'un à l'autre et dans lequel le panneau solaire composé (3) peut être déplié, au départ d'un état plié, en un état déplié dans lequel les panneaux solaires (4) s'étendent dans un plan commun (AA'), dans lequel le dispositif (1) est en outre doté d'un bâti (2) articulé au panneau solaire composé (3) et formé par deux parties de bâti (16, 17) pouvant être désassemblées, plus spécifiquement une première partie de bâti (16) et une deuxième partie de bâti (17), **caractérisé en ce que** la deuxième partie de bâti (17) est dotée de moyens de réglage (31) qui relient la deuxième partie de bâti (17) concernée au panneau solaire composé (3) et dans lequel les deux parties de bâti (16, 17) contiennent une base (18) s'étendant dans un plan et contiennent respectivement un nombre de nervures dressées (21) et (22), s'étendant transversalement à la base correspondante (18), dans lequel dans un état désassemblé du bâti (2), chaque partie de bâti (16, 17) forme une structure de soutien pour le panneau solaire (3), qui peut être dépliée en son état déplié en dépliant les panneaux solaires (4) l'un par rapport à l'autre, et dans lequel le panneau solaire composé (3) peut être tourné dans son ensemble dans l'état déplié par rapport à la première partie de bâti (16) avec laquelle il est articulé de manière à l'orienter dans une position horizontale et/ou dans des positions obliques aléatoires, dans lequel le bâti (2) forme, dans un état assemblé, une cage en forme de poutres (2) autour du panneau solaire composé plié (3), dans lequel la base (18) forme respectivement soit la surface inférieure (19) soit la surface supérieure (20) de la cage en forme de poutres (2), au moins lorsque le bâti (2) est assemblé afin de former une cage (2).

2. Dispositif (1) selon la revendication 1, **caractérisé en ce que** les panneaux solaires (4) sont formés d'un ou plusieurs élément(s) photovoltaïque(s) plat(s) (6) prévus sur un bâti de soutien plat (7) et dans lequel ces bâtis de soutien plats (7) sont mutuellement articulés.

3. Dispositif (1) selon la revendication 1 ou 2, **caractérisé en ce que** le dispositif (1) est doté de trois panneaux solaires rectangulaires (4), plus spécifiquement un panneau solaire intermédiaire (12) articulé sur les deux côtés longitudinaux (13) à un panneau solaire adjacent (14, 15), plus spécifiquement à un panneau solaire supérieur (14) d'une part et à un panneau solaire inférieur (15) d'autre part, conçus afin d'être positionnés, dans une position oblique du panneau solaire composé déplié (3), respectivement au-dessus et en dessous du panneau solaire intermédiaire (12).

4. Dispositif (1) selon la revendication 3, **caractérisé en ce que** le panneau solaire intermédiaire (12) peut être tourné vers l'avant en direction du panneau solaire supérieur (14), de sorte que les éléments photovoltaïques (6) des panneaux solaires (14) concernés sont adjacents l'un à l'autre dans l'état plié du panneau solaire composé (3), et dans lequel le panneau solaire inférieur (15) peut être tourné vers l'arrière en direction du panneau solaire intermédiaire (12), de sorte que les bâtis de soutien (7) des panneaux solaires (4) concernés sont adjacents l'un à l'autre dans l'état plié du panneau solaire composé (3).

5. Dispositif (1) selon la revendication 3 ou 4, **caractérisé en ce que** le panneau solaire composé (3) est articulé au bâti (2) sur le côté longitudinal (13) du panneau solaire intermédiaire (12) qui est adjacent au panneau solaire supérieur (14).

6. Dispositif (1) selon une ou plusieurs des revendications précédentes, **caractérisé en ce qu'**à l'état désassemblé du bâti (2), le panneau solaire composé (3) peut être déplié en son état déplié en dépliant les panneaux solaires (4) l'un par rapport à l'autre, et dans lequel le panneau solaire composé (3) peut être tourné dans son ensemble dans l'état déplié par rapport à la première partie de bâti (16) avec laquelle il est articulé, de manière à l'orienter dans une position horizontale et/ou dans des positions obliques aléatoires.

7. Dispositif (1) selon une ou plusieurs des revendications précédentes, **caractérisé en ce que** la première partie de bâti (16) et la deuxième partie de bâti (17) contiennent une base (18) s'étendant dans un plan, dans lequel cette base (18) forme respectivement soit la surface inférieure (19) soit la surface supérieure (20) de la cage en forme de poutres (2) et dans lequel les parties de bâti (16, 17) comprennent en outre un nombre de nervures dressées (21, 22) s'étendant transversalement à la base correspondante (18), et dans lequel les nervures dressées (21, 22) forment une rangée de nervures dressées adjacentes (21, 22) entre la surface supérieure (20) et la surface inférieure (19) du bâti (2) à l'état assemblé.

8. Dispositif (1) selon une ou plusieurs des revendications précédentes, **caractérisé en ce que** les parties de bâti (16, 17) sont conçues afin d'être graduellement érigées en soutien du panneau solaire composé déplié (3), dans lequel chaque partie de bâti (16, 17) est placée avec sa base (18) sur une surface plane ou sur un plan d'une structure de soutien.

9. Dispositif (1) selon les revendications 6 et 8, **caractérisé en ce que** le panneau solaire composé (3) est articulé à la première partie de bâti (16) contenant la surface inférieure (19) de la cage en forme de poutres (2), à savoir sur le côté longitudinal (29) de cette surface inférieure (19) face aux nervures dressées (21) de la première partie de bâti (16) concernée, dans lequel cette première partie de bâti (16) est conçue afin de soutenir le panneau solaire composé (3) en le plaçant avec sa base (18) dans une position située à une certaine hauteur (H) au-dessus d'une surface plane sur laquelle l'autre deuxième partie de bâti (17) est placée avec sa base de manière à soutenir le panneau solaire composé (3).

10. Dispositif selon une ou plusieurs des revendications précédentes, **caractérisé en ce que** les moyens de réglage (31) permettent de régler la distance (D) entre le panneau solaire composé déplié (3) et la deuxième partie de bâti (17) concernée, de manière à permettre l'orientation du panneau solaire composé déplié (3).

11. Dispositif (1) selon la revendication 10, **caractérisé en ce que** les moyens de réglage (31) comprennent un cylindre (32) et un axe (33), ainsi qu'une commande (34) de ces éléments, laquelle permet de régler la distance (D) susmentionnée entre la deuxième partie de bâti (17) et le panneau solaire composé déplié (3) et dans lequel les moyens de réglage (31) peuvent également être entreposés dans le bâti (2) dans l'état dans lequel il forme une cage (2) pour le panneau solaire composé plié (3).

12. Dispositif (1) selon une ou plusieurs des revendications 8 à 11, **caractérisé en ce qu'**il comprend un contenant (26) et **en ce que** le bâti (2) s'adapte sur le toit (30) du contenant (26), dans lequel à l'état assemblé du bâti (2) une cage est formée sur le toit (30) du contenant (26), dans laquelle le panneau solaire composé plié (3) est entreposé, dans lequel à l'état désassemblé du bâti (2), la deuxième partie de bâti (17) est placée au sol à côté du contenant (26), tandis que la première partie de bâti (16) repose sur le toit (30) du contenant (26) et dans lequel le panneau solaire composé (3) peut, dans cet état du bâti (2), être déplié en articulant les panneaux solaires (4) l'un par rapport à l'autre et dans lequel le panneau solaire composé déplié (3) peut être tourné de manière à l'orienter entre une position horizontale et/ou une position oblique aléatoire.
